# FASCICULE DE BREVET EUROPEEN

(11) **EP 2 906 374 B1**
(45) Date de publication et mention de la délivrance du brevet: **06.07.2022**
(21) Numéro de dépôt: 13785541.7
(22) Date de dépôt: 09.10.2013
(51) Int. Cl.: B22D 13/00, B23C 3/18, B23P 15/02

(54) **PROCÉDÉ DE FABRICATION D'AU MOINS UNE PIÈCE MÉTALLIQUE DE TURBOMACHINE**
VERFAHREN ZUR HERSTELLUNG MINDESTENS EINES METALLTURBINENTRIEBWERKTEILS
METHOD FOR MANUFACTURING AT LEAST ONE METAL TURBINE ENGINE PART

(30) Priorité: 09.10.2012 FR 1259616
(43) Date de publication de la demande: 19.08.2015
(73) Titulaire: Safran Aircraft Engines, 75015 Paris (FR)
(72) Inventeur: MARCILLAUD, Céline, Jeanne, F-77550 Moissy Cramayel Cedex (FR); DIGARD BROU DE CUISSART, Sébastien, F-77550 Moissy Cramayel Cedex (FR); MINEUR-PANIGEON, Marie, F-77550 Moissy Cramayel Cedex (FR); TEXIER, Anthony, F-77550 Moissy Cramayel Cedex (FR)
(74) Mandataire: Ernest Gutmann - Yves Plasseraud S.A.S.
(86) Numéro de dépôt international: PCT/FR2013/052412
(87) Numéro de publication internationale: WO 2014/057222

(56) Documents cités:
- WO-A2-02/095080
- GB-A- 2 290 998
- JP-A- 2006 336 059

## Description

La présente invention concerne un procédé de fabrication d'au moins une pièce métallique de turbomachine, et en particulier d'au moins une aube de roue de turbine d'un turboréacteur ou d'un turbopropulseur d'avion.

Il est connu d'utiliser la technique de moulage à cire perdue en vue de fabriquer simultanément plusieurs aubes de turbomachine. On rappelle que le moulage de précision à la cire perdue consiste à réaliser en cire, par injection dans des outillages, un modèle de chacune des aubes désirées. L'assemblage de ces modèles sur des bras de coulée également en cire, permet de constituer une grappe qui est ensuite plongée dans différentes substances afin de former autour de celle-ci une carapace de céramique d'épaisseur sensiblement uniforme.

Le procédé est poursuivi en faisant fondre la cire, qui laisse alors son empreinte exacte dans la céramique, dans laquelle un métal en fusion est versé, généralement via un godet de coulée. Après refroidissement du métal, la carapace est détruite et les pièces en métal sont séparées et parachevées par usinage.

Un tel procédé nécessite l'utilisation de matériaux rares, tels par exemple que l'Yttrine, pour former la carapace, ce qui peut poser des problèmes d'approvisionnement. La mise au point de la carapace est relativement fastidieuse, car il est nécessaire de trouver un compromis entre la résistance de la carapace aux efforts centrifuges et sa friabilité en vue de faciliter le démoulage. Un tel procédé nécessite en outre l'utilisation d'une installation spécifique. Enfin, il existe également un risque de fragilisation des pièces via la formation d'inclusions en aiguilles liées aux débris de la carapace qui se détachent pour se retrouver dans la pièce.

Par ailleurs, lorsque le métal utilisé pour la réalisation des aubes est du type TiAl, il existe un fort risque de porosité dans les pièces produites.

En effet, ce type d'alliage a une solidification très rapide, ce qui rend délicate la mise au point de la géométrie de pièce. Dans ce cas également, il est nécessaire d'effectuer un traitement thermique de type compression isostatique à chaud (C.I.C.) afin de refermer les éventuelles porosités. Un tel traitement thermique, outre son coût important, ne permet pas de refermer l'ensemble des porosités, en particulier les porosités débouchant au niveau de l'une des surfaces externes de la pièce.

En outre, lors du traitement thermique de compression isostatique à chaud, des contraintes résiduelles sont emmagasinées par la pièce. Des déformations non prévisibles peuvent alors être découvertes lors de l'usinage ultérieur de la pièce.

La présente invention permet de remédier à au moins une partie des inconvénients précités de façon simple, efficace et économique.

Les documents JP2006336059 et GB2290998 illustrent également l'art antérieur.

A cet effet, elle propose un procédé de fabrication d'au moins une pièce métallique de turbomachine, comprenant les étapes consistant à :
a) couler par centrifugation un alliage métallique dans un moule métallique permanent pour la réalisation d'une ébauche,
b) obtenir par coulée une ébauche qui a une forme allongée à section circulaire ou polygonale,
c) usiner l'ébauche pour la réalisation de la pièce.

L'invention permet de réduire les défauts de fonderie en utilisant un moule métallique permanent. On évite en effet les interactions entre un moule céramique et le métal en fusion ainsi que les défauts géométriques liés à une mauvaise qualité des cires ou de mise en grappe.

Par ailleurs, l'utilisation d'une forme simple d'ébauche, combinée à la centrifugation, permet d'optimiser le remplissage du moule. La matière mise en œuvre peut également être réduire grâce à la centrifugation, le centre du moule n'étant pas totalement rempli contrairement à une solution de fonderie par gravité. La coulée par centrifugation permet par ailleurs d'avoir le meilleur compris entre la vitesse de remplissage et la vitesse de solidification du métal.

L'utilisation d'un moule métallique permanent permet également de pouvoir réaliser des moules capables d'atteindre des niveaux de pression centrifuge élevés, et de s'affranchir des opérations longues et coûteuses de mise en grappe et de séchage des carapaces céramiques ainsi que des coûts et des temps de gamme de fabrication récurrents liés à la fabrication des carapaces céramiques qui sont à usage unique. Par opposition, un moule métallique permanent est réutilisable et facilement utilisable (gamme de fabrication des pièces moins complexe). On peut ainsi réduire les cycles de production.

Un autre avantage de l'utilisation d'une ébauche de forme simple et qu'elle ne nécessite pas de contrôle dimensionnel avant usinage. La géométrie simple de l'ébauche, possédant au moins un plan de symétrie, permet de réduire les risques de déformation, notamment lors d'un éventuellement traitement thermique de type compression isostatique à chaud, une telle géométrie générant peu de pièces non conformes et permettant par ailleurs une automatisation aisée de l'étape d'usinage. Ce type de géométrie évite également de créer des points chauds, phénomènes se produisant par exemple lorsqu'une zone épaisse est entourée de zones plus fines. On a donc une meilleure maîtrise métallurgique des pièces réalisées.

Avantageusement, les pièces usinées sont des aubes de turbomachine, telles par exemple que des aubes de turbine.

De préférence, l'alliage métallique est à base de TiAl, par exemple du type TiAl 48-2-2.

Le TiAl 48-2-2 comporte 48% d'Aluminium, 2% de Chrome et 2% de Niobium (pourcentage atomique).

Selon une caractéristique de l'invention, l'ébauche obtenue à l'étape b) subit un traitement thermique avant l'étape c) d'usinage.

Dans ce cas, ledit traitement thermique peut comporter une étape de compression isostatique à chaud.

Le but est d'obtenir une microstructure duplexe constituée de grains gamma et de grains lamellaires (alpha2/gamma).

Le traitement thermique appliqué peut en particulier être celui décrit dans le brevet US 5 609 698 et comporter une étape de traitement thermique de préparation à la compression isostatique à chaud, lors duquel l'ébauche est soumise à une température comprise entre 1900°F et 2100°F pendant une durée de 5 à 50 heures, une étape de compression isostatique à chaud à 2200°F, puis une étape supplémentaire lors de laquelle l'ébauche est soumise à une température de 1850°F à 2200 °F.

Selon une autre caractéristique de l'invention, l'étape a) consiste notamment à fondre un lingot dans un creuset métallique refroidi et à verser le métal ainsi fondu dans un moule permanent centrifugé.

L'ébauche obtenue à l'étape b) peut être pleine, au moins une pièce étant alors usinée au cœur de l'ébauche.

En variante, l'ébauche obtenue à l'étape b) peut être tubulaire, au moins une pièce étant alors usinée dans l'épaisseur de la paroi tubulaire de l'ébauche.

Dans ce cas, le nombre de pièces usinées dans l'ébauche peut être supérieur à six, de préférence au moins égal à dix.

D'autres avantages et caractéristiques de l'invention apparaîtront à la lecture de la description suivante faite à titre d'exemple non limitatif et en référence aux dessins annexés dans lesquels :
- la figure 1 est un diagramme illustrant schématiquement les différentes étapes successives d'une forme de réalisation du procédé selon l'invention,
- la figure 2 représente un dispositif de fonte, de coulée et de moulage d'ébauches,
- les figures 3 et 4 sont des vues schématiques de face et de côté d'un barreau cylindrique plein, dans lequel est destinée à être usinée une aube de turbomachine, ces figures n'illustrant pas l'invention,
- la figure 5 est une vue schématique en perspective d'un barreau cylindrique creux selon l'invention, dans lequel sont destinées à être usinées des aubes de turbomachine,
- la figure 6 est une vue schématique en perspective et en coupe axiale du barreau de la figure 4.

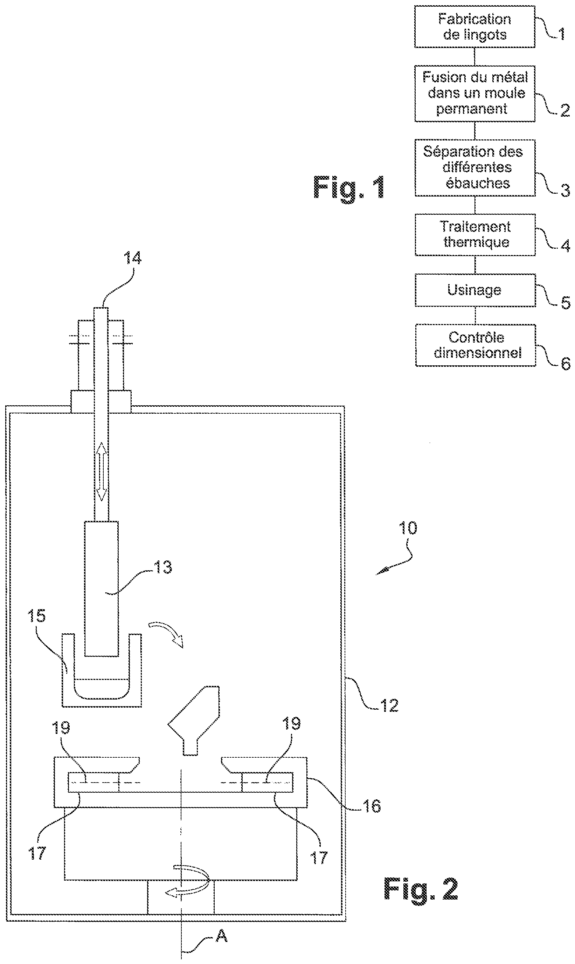

La figure 1 est un diagramme illustrant les différentes étapes successives d'une forme de réalisation du procédé selon l'invention.

Ce procédé comporte une première étape 1 de fabrication d'un moins un lingot, par exemple en un alliage de type gamma-TiAI, de préférence du type TiAl 48-2-2. Le TiAl 48-2-2 comporte 48% d'Aluminium, 2% de Chrome et 2% de Niobium (pourcentage atomique).

Le lingot peut être réalisé à l'aide d'un procédé de type « Vacuum Arc Remelting » (VAR) ou de type « Plasma Arc Remelting » (PAM).

Le procédé comporte ensuite une étape 2 de refonte du lingot par procédé VAR dans un creuset métallique et de verse dans un moule permanent centrifugé. Une telle étape va maintenant être décrite en référence à la figure 2.

Cette figure représente un dispositif 10 de fabrication d'ébauches 11 se présentant par exemple sous la forme de barreaux cylindriques, par des opérations successives de fonte, coulée et moulage.

Le dispositif 10 comprend une enceinte 12 fermée et étanche dans laquelle est appliqué un vide partiel. Le lingot 13 en alliage métallique, à base de TiAl par exemple, est fixé à une extrémité d'une électrode 14 qui est reliée à une borne d'une source de courant dont l'autre borne est reliée à un creuset 15 logé dans l'enceinte 12. Pour provoquer la fusion du lingot 13, l'électrode 14 est déplacée au dessus du creuset 15 par des mouvements de va-et-vient de faibles amplitudes. Lorsque le lingot 13 se rapproche du creuset 15, des arcs électriques se forment entre le creuset 15 et le lingot 13 ce qui provoque la fusion du lingot 13 qui tombe alors au fond du creuset 15 (*VAR : Vacuum Arc Remelting*)*.* Lorsque le lingot 13 est complètement fondu, l'alliage métallique en fusion dans le creuset 15 est versé dans un moule 16 métallique permanent.

Ce moule 16 permet de couler l'alliage par centrifugation. Pour cela, le moule 16 est mis en rotation autour d'un axe A, le moule 16 comprenant plusieurs logements cylindriques 17 qui s'étendent radialement autour de l'axe A et sont régulièrement espacés autour de cet axe A. Les forces centrifuges générées par la rotation du moule 16 forcent l'alliage en fusion à pénétrer dans ces logements 17 et à les remplir.

Après refroidissement, le moule 16 est démonté et la pièce moulée (appelée « brut ») est extraite. La pièce moulée a une forme de roue comportant plusieurs ébauches 11 radiales solidaires par leurs extrémités radialement internes d'un moyeu central commun.

Chaque ébauche 11, de forme pleine et cylindrique, peut être désolidarisée du moyeu et des autres ébauches 11 par usinage (étape 3 à la figure 1), et peut ensuite subir un traitement thermique (étape 4 à la figure 1).

Le traitement thermique appliqué peut en particulier être celui décrit dans le brevet US 5 609 698 et comporter une étape de traitement thermique de préparation à la compression isostatique à chaud, lors duquel l'ébauche 11 est soumise à une température comprise entre 1900°F et 2100°F pendant une durée de 5 à 50 heures, une étape de compression isostatique à chaud à 2200°F, puis une étape supplémentaire lors de laquelle l'ébauche est soumise à une température de 1850°F à 2200 °F.

L'ébauche 11 ayant subi le traitement thermique est ensuite usinée (étape 5 à la figure 1) pour former au moins une aube 18.

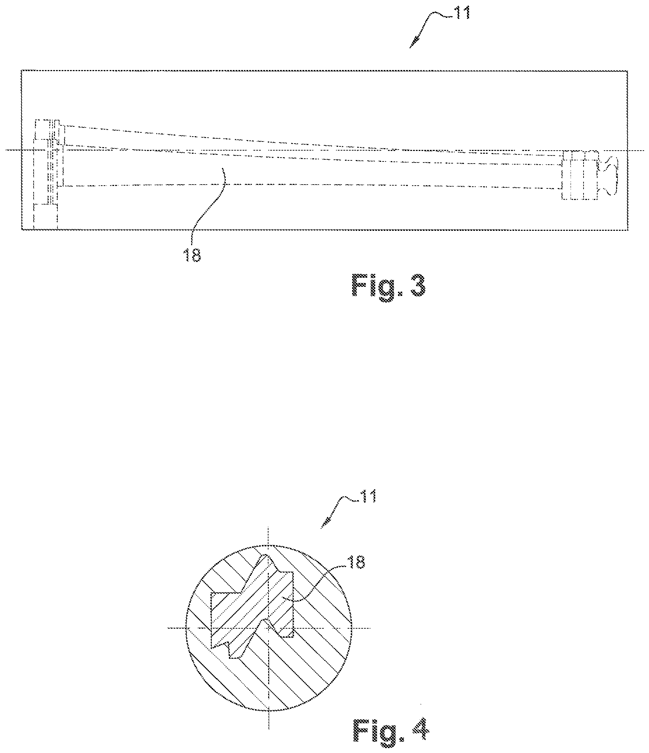

Les figures 3 et 4 représentent en particulier le cas où une seule aube 18 est usinée dans une ébauche.

Bien entendu, il est également possible d'usiner trois, quatre, cinq, voire six aubes 18 par exemple dans une même ébauche 11.

On notera qu'il est également possible d'obtenir des ébauches 11 de forme tubulaire. Pour cela, un noyau cylindrique 19 (illustré schématiquement par un trait pointillé à la figure 2) peut être monté coaxialement à l'intérieur de chacun des logements 17.

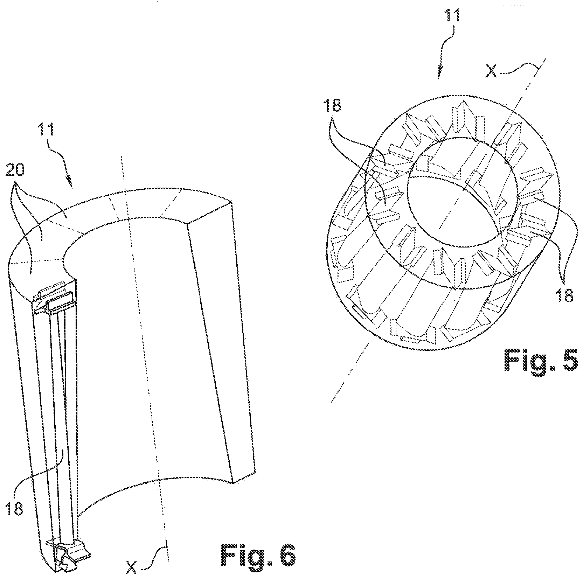

Les figures 5 et 6 représentent ainsi chacune une ébauche 11 se présentant sous la forme d'un barreau ayant une forme cylindrique creuse.

Dans un exemple particulier de réalisation de l'invention, le barreau a une longueur ou dimension axiale comprise entre 10 et 50cm, un diamètre externe compris entre 5 et 20cm, un diamètre interne compris entre 4 et 10cm et une épaisseur radiale comprise entre 1 et 10cm.

Comme cela est visible aux figures 4 et 5, l'ébauche tubulaire 11 est usinée pour réaliser dix aubes 18 de rotor, chaque aube 18 comportant une pale dont les extrémités sont reliées à des plates-formes. Les aubes 18 sont usinées dans l'épaisseur de la paroi de l'ébauche tubulaire 11, dans des secteurs angulaires 20 de l'ébauche 11 qui sont disposés à côté les uns des autres et qui ont chacun une forme allongée s'étendant sensiblement parallèlement à l'axe longitudinal X de l'ébauche (les secteurs 20 sont délimités par des traits pointillés en figure 5).

La paroi de l'ébauche 11 peut avoir une épaisseur qui varie le long de l'axe longitudinal X (cf. figure 5).

A l'issue de l'usinage, les aubes sont contrôlées (étape 6 à la figure 1) à l'aide de procédés de contrôle non destructif (radio, ressuage, contrôle dimensionnel).

## Revendications

1. Procédé de fabrication d'aubes (18) de turbomachine, telle par exemple qu'une aube de turbine, comprenant les étapes consistant à :
a) couler par centrifugation un alliage métallique à base de TiAI dans un moule métallique permanent (16), le moule (16) étant mis en rotation autour d'un axe (A), le moule comprenant plusieurs logements (17) s'étendant radialement autour dudit axe (A) et régulièrement espacés autour de cet axe (A), un noyau (19) cylindrique étant monté coaxialement à l'intérieur de chacun des logements (17),
b) obtenir par coulée une pièce moulée ayant une forme de roue comportant plusieurs ébauches (11) radiales solidaires par leurs extrémités radialement internes d'un moyeu central commun, chaque ébauche (11) étant tubulaire et se présentant sous la forme d'un barreau ayant une forme allongée creuse, à section circulaire ou polygonale,
c) usiner chaque ébauche (11) pour la réalisation d'aubes (18), les aubes (18) étant usinées dans l'épaisseur de l'ébauche tubulaire (11), dans des secteurs angulaires (20) de l'ébauche (11) qui sont disposés à côté les uns des autres et qui ont chacun une forme allongée s'étendant sensiblement parallèlement à l'axe de l'ébauche (11).

2. Procédé selon la revendication 1, **caractérisé en ce que** l'alliage métallique est du type TiAI 48-2-2.

3. Procédé selon la revendication 1 ou 2, **caractérisé en ce que** l'ébauche (11) obtenue à l'étape b) subit un traitement thermique avant l'étape c) d'usinage.

4. Procédé selon la revendication 3, **caractérisé en ce que** ledit traitement thermique comporte une étape de compression isostatique à chaud.

5. Procédé selon l'une des revendications 1 à 4, **caractérisé en ce que** l'étape a) consiste notamment à fondre un lingot (13) dans un creuset métallique refroidi (15) et à verser le métal ainsi fondu dans un moule permanent centrifugé (16).

6. Procédé selon l'une des revendications 1 à 5, **caractérisé en ce que** le nombre d'aubes (18) usinées dans l'ébauche (11) est supérieur à six, de préférence au moins égal à dix.

## Patentansprüche

1. Verfahren zum Herstellen von Turbomaschinenschaufeln (19), wie beispielsweise einer Turbinenschaufel, umfassend die folgenden Schritte:
a) Schleudergießen einer Metalllegierung auf Basis von TiAl in eine metallische Dauergießform (16), wobei die Gießform (16) um eine Achse (A) in Drehung versetzt wird, wobei die Gießform mehrere Aufnahmen (17) aufweist, die sich radial um die Achse (A) herum erstrecken und um diese Achse (A) herum gleichmäßig beabstandet sind, wobei im Inneren der Aufnahmen (17) jeweils ein zylindrischer Kern (19) koaxial gelagert ist,
b) Erhalten eines Formteils durch Gießen, das eine Rad-Form mit mehreren radialen Rohlingen (11) aufweist, die mit ihren radial inneren Enden fest mit einer gemeinsamen zentralen Nabe verbunden sind, wobei jeder Rohling (11) rohrförmig ist und in Form eines Stabes mit einer hohlen, länglichen Form mit kreisförmigem oder polygonalem Querschnitt vorliegt,
c) Bearbeiten jedes Rohlings (11) zur Herstellung von Schaufeln (18), wobei die Schaufeln (18) in der Dicke des rohrförmigen Rohlings (11) in Winkelsektoren (20) des Rohlings (11) ausgearbeitet werden, die nebeneinander angeordnet sind und jeweils eine längliche Form aufweisen, die sich im Wesentlichen parallel zur Achse des Rohlings (11) erstreckt.

2. Verfahren nach Anspruch 1,
**dadurch gekennzeichnet, dass** die Metalllegierung vom Typ TiAl 48-2-2 ist.

3. Verfahren nach Anspruch 1 oder 2,
**dadurch gekennzeichnet, dass** der in Schritt b) erhaltene Rohling (11) vor dem Bearbeitungsschritt c) einer Wärmebehandlung unterzogen wird.

4. Verfahren nach Anspruch 3,
**dadurch gekennzeichnet, dass** die Wärmebehandlung einen Schritt des isostatischen Heißpressens umfasst.

5. Verfahren nach einem der Ansprüche 1 bis 4,
**dadurch gekennzeichnet, dass** Schritt a) insbesondere darin besteht, einen Barren (13) in einem gekühlten Metalltiegel (15) zu schmelzen und das so geschmolzene Metall in eine Schleuderguss-Dauergießform (16) zu gießen.

6. Verfahren nach einem der Ansprüche 1 bis 5,
**dadurch gekennzeichnet, dass** die Anzahl der aus dem Rohling (11) ausgearbeiteten Schaufeln (18) größer als sechs, vorzugsweise gleich mindestens zehn, ist.

## Claims

1. Method of fabricating turbine engine blades (18), such as for example a turbine blade, comprising the steps consisting of:
a) casting by centrifuging a TiAl-based metal alloy into a permanent metal mold (16), the mold being set into rotation about an axis (A), the mold (16) having a plurality of cylindrical housings (17) that extend radially around the axis (A) and regularly spaced apart around this axis (A), a cylindrical core (19) being mounted coaxially inside each of the housings (17),
b) obtaining by casting a casting in the form of a wheel having a plurality of radial blanks (11) secured via their radially inner ends to a common central hub, each blank (11) being tubular and being in the form of a bar of elongate shape and of section that is circular or polygonal; and
c) machining each blank (11) to make blades (18), each blade being machined from the thickness of the tubular blank (11), over angular sectors (20) of the blank (11) that are arranged side by side, each being of an elongate shape extending substantially parallel to the longitudinal axis of the blank (11).

2. Method according to claim 1, **characterized in that** the metal alloy is of the TiAl 48-2-2 type.

3. Method according to claim 1 or 2, **characterized in that** the blank (11) obtained in step b) is subjected to heat treatment prior to machining step c).

4. A method according to claim 3, **characterized in that** said heat treatment includes a step of hot isostatic compression.

5. A method according to any one of claims 1 to 4, **characterized in that** step a) consists in particular in melting an ingot (13) into a cooled metal crucible (15) and in pouring the metal melted in this way into a centrifuged permanent mold (16).

6. A method according to any one of claims 1 to 5, **characterized in that** the number of blades (18) machined from the blank (11) is greater than six, and preferably is not less than ten.
